# EUROPEAN PATENT APPLICATION

(11) **EP 1 022 579 A1**
(43) Date of publication of application: **26.07.2000**
(21) Application number: 98963571.9
(22) Date of filing: 30.12.1998
(51) Int. Cl.: G01S 13/75, G06K 7/10

(54) **INTERACTIVE SYSTEM FOR THE AUTOMATIC DETECTION AND IDENTIFICATION OF ELEMENTS (S.I.D.I.A.)**

(30) Priority: 27.07.1998 ES 9801580
(71) Applicant: Alonso de Miguel, José Javier, 28750 Madrid (ES); Ripoll Vermenouze, Miguel, 28033 Madrid (ES)
(72) Inventor: Alonso de Miguel, José Javier, 28750 Madrid (ES); Ripoll Vermenouze, Miguel, 28033 Madrid (ES)
(74) Representative: Davila Baz, Angel
(86) International application number: ES9800363
(87) International publication number: WO0007036

(57) **Abstract**

The present interactive system of exploration, detection and automatic identification of any type of elements of a group or several groups of elements, it is compound for:
A. - an originator of electromagnetic induction associated to a system transmitter-base (transmitter/receptor) digital coded of radiofrequency, commanded by a computer system that negotiates the emission of an electromagnetic impulse; the emission of digital exploration codes; the reception of groups of answers of identification codes and information stored in the chips; the decoding of this answer signs, their storage, their later one processed and the optional transmission of data to the computer net.
B. - Diverse units chip-satellite (receivers/transmitters) integrated in all and each one of the susceptible elements of to detect and to identify is composed by a reel receptor of electromagnetic induction that in turn makes the functions of transmitter antenna (receiver/transmitter) of connected radiofrequency to a chip that includes in their design a small condenser/storage battery, a digital transmitter of radiofrequency, a microprocessor and an unit by heart; everything encapsulated it in a plane support of very reduced size.

This system possesses the innovative capacity to explore, to detect and to identify in a completely discriminated against way the elements of one or several groups of elements, in an exact way, updated, durable in the time and inert in absence of the adapted excitement y/o code; everything it without necessity of its previous ordination, neither of the existence of a physical, optic or magnetic contact.

Also the system S.I.D.I.A. it allows the bi-directional transfer of information between the elements and the system of computer administration during the own exploration process, to condition of using the appropriate codes well to read, well to modernize, or to enlarge, to modify, or to suppress the information stored in the chips. This whole process you can make simultaneously during the same lapse of time interplaying in diverse elements of a group or several groups of elements.

## Description

The present invention refers to an interactive system of exploration, detection and automatic identification composed for:
A. - an originator of electromagnetic induction associated to a system transmitter-base (transmitter/receiver) digital coded of radiofrequency, commanded by a computer system that negotiates: the emission of an electromagnetic impulse; the emission of digital exploration codes; the reception of groups of answers of identification codes and information stored in the chips; the decoding of this answer signs, their storage, their later one processed and the optional transmission of data to the computer net.
B. - Diverse units chip-satellite (receivers/transmitters) integrated in all and each one of the susceptible elements of to detect and to identify that are compound: for a reel receiver of electromagnetic induction -that in turn makes the functions of transmitter antenna (receiver/transmitter) of radiofrequency -, connected to a chip that includes in their design a small condenser/storage battery, a digital transmitter of radiofrequency, a microprocessor and an unit by heart; everything encapsulated it in a plane support of very reduced size.

So far the identification and detection of any element type requires the existence of a physical, optic contact, or a simple magnetic excitement with the detection system, and the sequential previous ordination of the same ones in the event of a group of them adapting the step, one to one, of the referred elements for the system of existent detection.

Some basic examples of that exposed are the existent optic readers in most of the commercial establishments, where the detection and identification of their products is carried out by means of the optic reading, one to one, of the code of bars of the labels together to this products; or the controls of entry/exits of vehicles in garages by means of simple magnetic records that detect the entrance or the payee's of the same one exit, without identification process some; or the credit cards, debit, purse, etc... that use an electronic process of reading of its magnetic band, or even a chip, to condition of a previous ordination (the necessary appropriate placement of the card in its groove), a contact physical electric y/o, a sequence, and a reading process always one to one.

Because well, the innovative quality of the concept S.I.D.I.A. it is their capacity for, to explore, to detect and to identify in a discriminated against way, exact, and durable in the time, the elements of one or several groups of elements, without necessity that a physical or optic contact exists between the or the elements to identify and the detection system, and of course without necessity of its previous ordination. Therefore the innovative quality of the system S.I.D.I.A. it is their capacity to explore, to detect and to identify multiple elements, without previous order in a single process. This invention is also perfectly updated, durable and inert in absence of the appropriate excitement.

**OPERATION OF THE SYSTEM:** The system stores chains of digital codes inside a computer environment associated to administration programs that you/they allow to explore, to detect, to identify and to order elements of a group or diverse groups that take integrated the chip-satellite, without the necessity of a previous order.

It commands the system a device of electromagnetic induction that generates a field of certain reach, and that it contributes the necessary energy for the activation of the chip-satellite that picked up by the reel receiver it feeds the activation of the operation of all the located chip-satellite in the environment of their reach. Immediately the system transmitter-base (transmitter/receiver) associate, emits his digital codes of radiofrequency assigned as of access, determinant to obtain the excitement of the chip-satellite that will transmit the digitized information stored in the chip in turn, and that it will be picked up by the system transmitter-base (transmitter/receiver) that will incorporate it to the associated computer system of administration, for the identification and ordination of the elements of the group or groups that it is to identify or to order.

The system transmitter-base (transmitter/receiver) of radiofrequency, it prepares for their work frequencies, for their band width and for the design of their digital chains of data, of the capacity to emit some exploration codes or teachers that generate the sequential transmission on the part of the chip-satellite together to the elements to identify that later on they are decoded by the computer system allowing the identification discriminated against of the same ones, identifying them and ordering them in reason of the necessities. The whole process, is made during a period of time of short or very short duration.

They incorporate to the present memory two diagrams where it is captured in a graphic way the basic system and the outline of operation of the S.I.D.I.A., to the corresponding explanatory effects.

The definition and programming of the exploration codes, detection, access and identification are stored in a computer system, it stops later on, to be recorded the same ones by heart inside of the unit of the chips belonging to each chip-satellite. The information of each element, would rot or to be stored in the computer system of administration associated to the previous codes, or to be incorporate inside the memory of the own chip-satellite.

All the data stored by heart inside the unit of the referred chip-satellite, integrated in each one of the elements, are susceptible of being read, to be enlarged, to modify or to be eliminated, by means of the use of the defined specific codes to such an end, everything it inside a process of rewriting/reassignment, optional, immediately after the detection and general identification, selecting the element or elements to reallocate, what allows to modernize or award their identifying characteristics again, inside the same impulse inductor and in a multiple way to several chip-satellite.

The on original in contribution of technologies already existent, together with other development, bases the obtaining of the results again that it describes the concept before exposed, using the following principles:
1) exploration, Detection and Identification of elements. - Based on the bi-directional and interactive transmission of digital signs by radiofrequency.
2) discrimination. - Based in the programming of chains of digital data, associated to the elements of the groups that allow to identify them multiply in an exact way, with independence of their order and quantity.
3) absence of physical contact. - Based in the emitted electromagnetic induction that allows to excite, at defaulted distances, to the elements of the group transforming them into active transmitters to the chip/satellite that were completely inert until that moment.
4) accuracy. - By means of the emission and reception of sufficiently complex chains of digital codes to assure the discrimination taken place by the reconstruction of the chains of digital codes, even in the case of incomplete receptions.
5) bring up to date. - The codes carry a defaulted information, enlargeable, amendable or eliminable later on, the times that he/she is necessary.
6) durability. - The codes and the stored information stay in the time without necessity of external or internal feeding some, in a permanent way.
7) inactivity. - The chip-satellite maintains a completely inert situation, until receiving the appropriate induced excitement, instant in which are activated, receiving and emitting codes and information, returning immediately to its previous inert state.

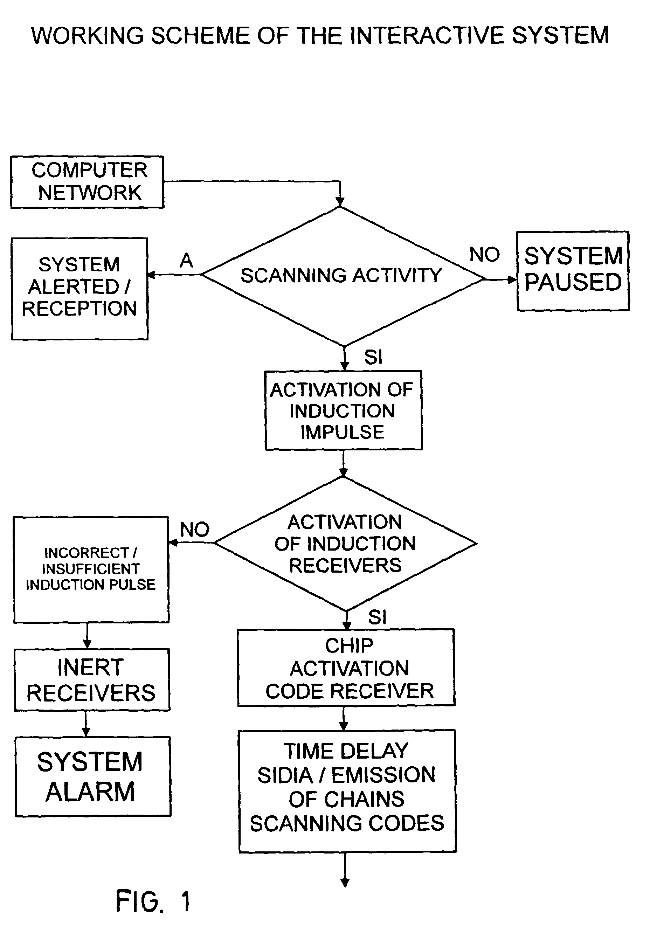

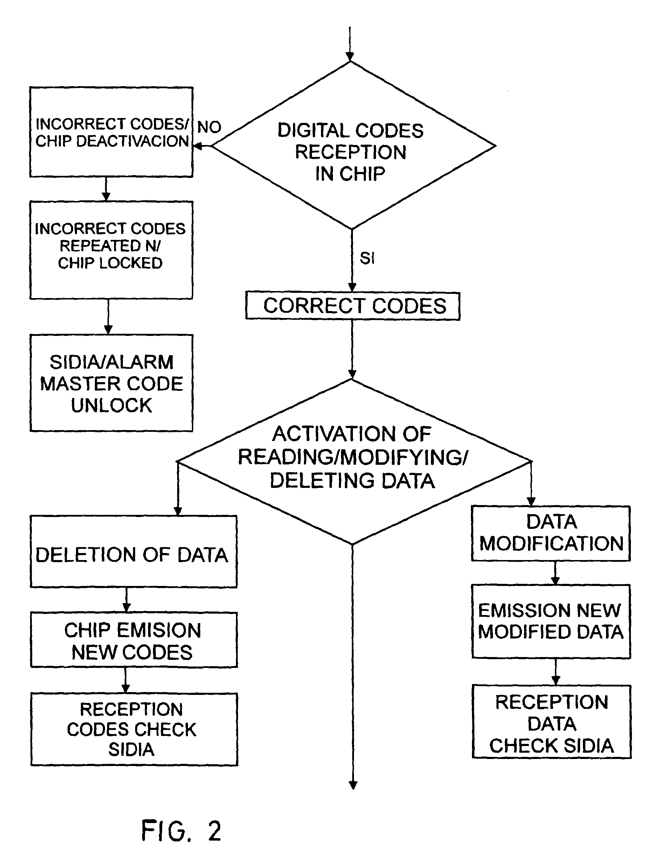

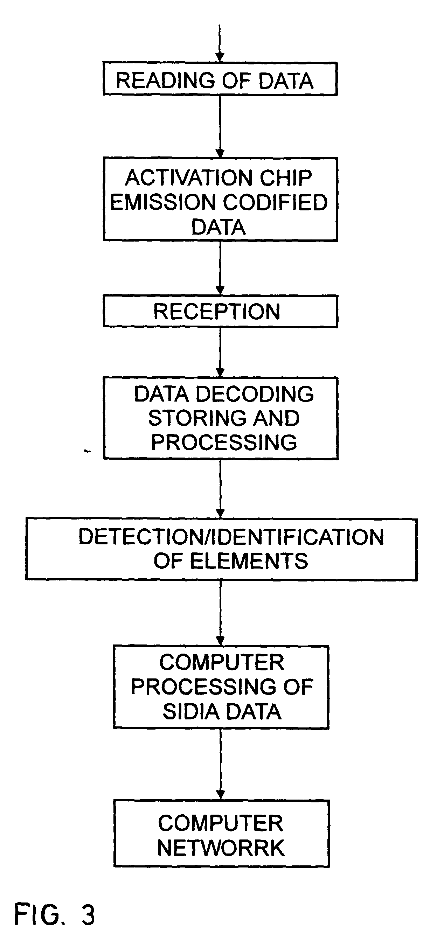

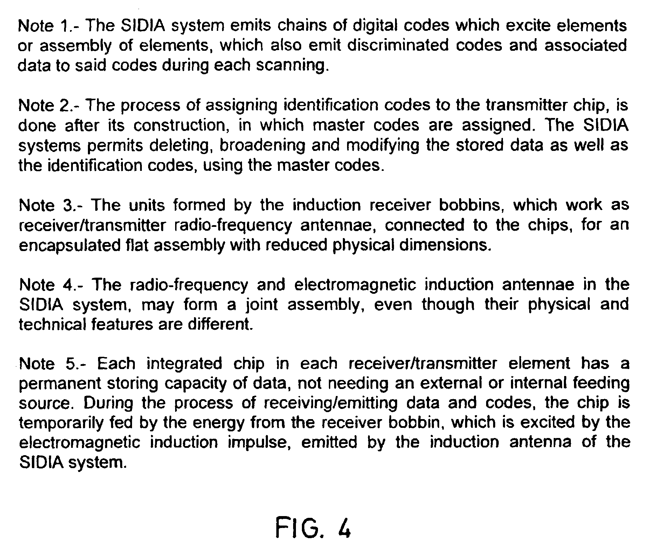

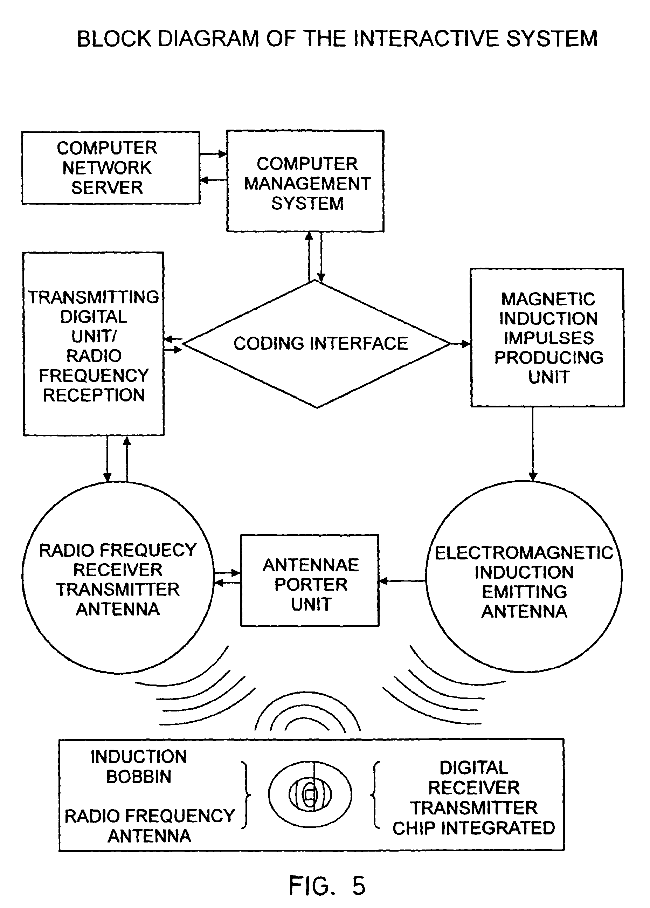

## Claims

1. interactive system of exploration, detection and automatic identification that it is characterized because by means of a device of electromagnetic induction that generates a field of certain reach that feeds the activation of the operation of all the located chip-satellite in the environment of their teach.

2. system that is characterized by the apparent possibility of only not to explore and to detect, but identifying any element type or group of elements, in a multiple way without necessity of an ordination or previous manipulation, neither I contact some physical or optic.

3. system that is also characterized because the device chip/satellite that is integrated to each element or group of elements, consists for a reel receptor of electromagnetic induction -that in turn makes the functions of antenna transmitter (receiver/transmitter) of radiofrequency -, connected to a chip that includes in its design a small condenser/storage battery, a digital transmitter of radiofrequency, a microprocessor and an unit by heart; everything encapsulated it in a plane support of very reduced size. The chip-satellite maintains all the information, benefits and capacity of to get excited and to be activated under the appropriate conditions, without necessity of feeding source some, and also for its small physical dimensions it can be integrated or to encapsulate perfectly in any element type to be able to be detected and identified with absolute accuracy.

4. characterized system because the detection and identification of the elements is based on the interactive and bi-directional transmission of digital signs of radiofrequency whose codes can be the sufficiently complex ones to guarantee an accuracy and security in the completely innovative identification.

5. system that, according to the recovery 3, it is characterized because the codes and data stored in the chip-satellite integrated in the elements, they can be modified, enlarged, modernized or eliminated by means of the use of defined specific codes to such an end.

6. system that is characterized because it is constantly modernized thanks to the interactivity and existent multiple bi-directional among the transmitter-base and the chip-satellite that are inside the performance reach, arid during the exploration process, detection and identification.

7. system that, according to the recoveries 1 and 4, it is characterized because the device transmitter-base, associated to the computer application S.I.D.LA., it emits some chains of data digitally, (that include exploration codes and teachers) that allow, to excite and to activate the chip-satellite that, in turn they respond to the transmitter-base emitting their codes and digital information and, once decoded they allow to achieve a discriminated against identification of the multiple elements according to the priorities settled down by the computer application, and everything it during a period of very short duration.

8. system characterized finally by an exploration application, detection and multiple universal identification of any type of elements,
individually or in groups, in function of the integration of the chip-satellite inside the element during their production, in their packed, baled, or their labelled; point for its accounting, inventoried, transport, distribution, control or administration process that he/she is necessary, and everything depending it on the reaches defaulted for each application in the transmitter-base and system S.I.D.I.A..
